(19) Europäisches Patentamt
European Patent Office
Office européen des brevets

(11) EP 4 394 980 A1

(12) EUROPEAN PATENT APPLICATION
published in accordance with Art. 153(4) EPC

(43) Date of publication:
**03.07.2024 Bulletin 2024/27**

(21) Application number: **22922774.9**

(22) Date of filing: **28.01.2022**

(51) International Patent Classification (IPC):
***H01M 10/0566*** *(2010.01)* ***H01M 10/0567*** *(2010.01)*

(52) Cooperative Patent Classification (CPC):
Y02E 60/10

(86) International application number:
**PCT/CN2022/074549**

(87) International publication number:
**WO 2023/141929 (03.08.2023 Gazette 2023/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Zhangwan Town, Jiaocheng District**
**Ningde City**
**Fujian 352100 (CN)**

(72) Inventors:
- **LI, Wenwen**
  **Ningde City, Fujian 352100 (CN)**
- **TANG, Chao**
  **Ningde City, Fujian 352100 (CN)**

(74) Representative: **Icosa**
**83 avenue Denfert-Rochereau**
**75014 Paris (FR)**

# (54) ELECTROCHEMICAL DEVICE AND ELECTRONIC DEVICE

(57) This application provides an electrochemical device and an electronic device. The electrochemical device includes a positive electrode plate, a negative electrode plate, an electrolyte solution, and a separator. A mass percent A of the electrolyte solution in a total mass of a battery cell is 2% to 8%. The electrolyte solution includes a sulfur-containing substance with a valence of $S^{4+}$/$S^{6+}$ or above. Based on a total mass of the electrolyte solution, a mass percent B of the sulfur-containing substance is 10% to 20%. By controlling the mass percent of the electrolyte solution and the use of the sulfur-containing substance and the fluorine-containing additive, this application improves the ionic conductivity of the SEI film, and reduces consumption of the electrolyte solution during cycling, thereby enhancing safety performance and cycle performance while reducing the electrolyte volume.

EP 4 394 980 A1

## Description

### TECHNICAL FIELD

This application relates to the technical field of electrochemistry, and in particular, to an electrochemical device and an electronic device.

### BACKGROUND

By virtue of a high specific energy, a high working voltage, a low self-discharge rate, a small size, a light weight, and other characteristics, lithium-ion batteries are widely used in various fields such as electrical energy storage, portable electronic devices, and electric vehicles. With increasingly wider application of the lithium-ion batteries, higher requirements are imposed on the lithium-ion batteries. For example, a lithium-ion battery is required to have a faster charging speed and a longer service life.

The electrolyte retention rate exerts a great effect on the cycle performance of a lithium-ion battery. Under the condition of a high compaction density, a high electrolyte retention rate poses more safety hazards and challenges, but a lower content of the electrolyte solution brings about fading of the cycle performance.

### SUMMARY

An objective of this application is to provide an electrochemical device and an electronic device to improve cycle performance of the electrochemical device. Specific technical solutions are as follows:

A first aspect of this application provides an electrochemical device. The electrochemical device includes a positive electrode plate, a negative electrode plate, an electrolyte solution, and a separator. A mass percent A of the electrolyte solution in a total mass of a battery cell is 2% to 8%. For example, A may be 2%, 2.5%, 3%, 3.5%, 4%, 4.5%, 5%, 5.5%, 6%, 6.5%, 7%, 7.5%, 8%, or a value falling within a range formed by any two thereof. The electrolyte solution includes a sulfur-containing substance with a valence of $S^{4+}/S^{6+}$ or above. Based on a total mass of the electrolyte solution, a mass percent B of the sulfur-containing substance is 10% to 20%. For example, B may be 10%, 11%, 12%, 13%, 14%, 15%, 16%, 17%, 18%, 19%, 20%, or a value falling within a range formed by any two thereof.

The total mass of the battery cell is the mass of the mass of the electrochemical device net of the packaging structure.

The applicant hereof finds that, by controlling the mass percent of the electrolyte solution and the mass percent of the film-forming additive with a valence of $S^{4+}/S^{6+}$ or above to fall within the ranges specified herein, this application enables formation of a stable solid electrolyte interphase (SEI) film of a high ion conductivity on the negative electrode, thereby reducing the consumption of the electrolyte solution during cycling, and enhancing the cycle performance and safety performance of the electrochemical device under the condition of a low electrolyte volume.

In an embodiment of this application, the sulfur-containing substance is at least one selected from compounds represented by the following formulas:

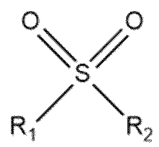
(I-A)

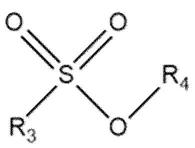
(I-B)

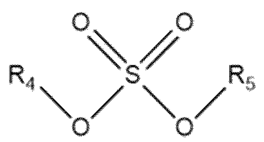
(I-C)

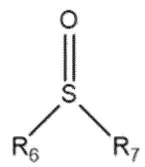
(I-D)

In the formulas above, $R_1$, $R_2$, $R_3$, $R_4$, $R_5$, $R_6$, and $R_7$ each are any one independently selected from $C_1$ to $C_{10}$ saturated hydrocarbyl, $C_2$ to $C_{10}$ unsaturated hydrocarbyl, $C_1$ to $C_{10}$ haloalkyl, $C_2$ to $C_{10}$ haloalkenyl, $C_2$ to $C_{10}$ haloalkynyl, $C_6$ to $C_{26}$ aryl, -F, -Cl, or-H.

$R_1$ and $R_2$, $R_3$ and $R_4$, $R_5$ and $R_6$, and $R_7$ and $R_8$ are able to be connected to form rings respectively.

Without being limited to any theory, the applicant hereof finds through research that, by selecting the above sulfur-containing substance, this application can further enhance the cycle performance and safety performance of the electrochemical device.

In an embodiment of this application, the sulfur-containing substance includes at least one of 2,4-butanesultone, 1,3-propanesultone, ethylene sulfite, propylene sulfite, dimethyl sulfite, or diethyl sulfite. Without being limited to any theory, the applicant hereof finds through research that, by selecting the above sulfur-containing substance, this application can further enhance the cycle performance and safety performance of the electrochemical device.

In an embodiment of this application, the electrolyte solution includes a fluorine-containing additive. Based on the total mass of the electrolyte solution, a mass percent C of the fluorine-containing additive is 15% to 30%. For example, C may be 15%, 18%, 21%, 24%, 27%, 30%, or a value falling within a range formed by any two thereof. The applicant hereof finds through research that, by controlling the mass percent of the fluorine-containing additive to fall within the range specified herein, the additive is conducive to forming a stable SEI film of a high ion conductivity on the negative electrode, thereby enhancing the cycle performance and safety performance of the electrochemical device.

In an embodiment of this application, the fluorine-containing additive is at least one selected from compounds represented by the following formulas:

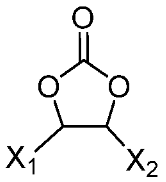,
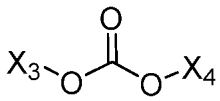,
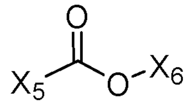,

(II-A) (II-B) (II-C)

$Y_1Fn^-Li^+$, (II-D)

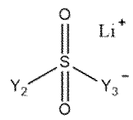

(II-E)

In the formulas above, $X_1$, $X_2$, $X_3$, $X_4$, $X_5$, and $X_6$ each are any one independently selected from $C_1$ to $C_{10}$ fluorinated saturated hydrocarbyl, $C_2$ to $C_{10}$ fluorinated unsaturated hydrocarbyl, $C_1$ to $C_{10}$ haloalkyl, $C_2$ to $C_{10}$ haloalkenyl, $C_2$ to $C_{10}$ haloalkynyl, $C_6$ to $C_{26}$ aryl, -F, or -H;

$Y_1$ includes P, B, O, N, or S;
$Y_2$ and $Y_3$ each are any one independently selected from $C_1$ to $C_{10}$ fluorinated saturated hydrocarbyl, $C_2$ to $C_{10}$ fluorinated unsaturated hydrocarbyl, P, B, O, S, or N;
At least one of $X_1$ and $X_2$, $X_3$ and $X_4$, $X_5$ and $X_6$, or $Y_2$ and $Y_3$ is a fluorine-containing group; and
$X_1$ and $X_2$, $X_3$ and $X_4$, $X_5$ and $X_6$, and $Y_2$ and $Y_3$ are able to be connected to form rings respectively.

Without being limited to any theory, the applicant hereof finds that, by selecting the above fluorine-containing additive, this application can further enhance the cycle performance and safety performance of the electrochemical device.

In an embodiment of this application, the fluorine-containing additive includes at least one of fluoroethylene carbonate, fluoroethyl methyl carbonate, fluorodimethyl carbonate, fluorodiethyl carbonate, ethyl fluoropropionate, propyl fluoropropionate, ethyl fluoroacetate, lithium hexafluorophosphate, lithium bis(trifluoromethylsulfonyl)imide, lithium bis(fluorosulfonyl)imide, lithium difluoro(oxalato)borate, lithium tetrafluoroborate, lithium trifluoromethanesulfonate, or lithium difluorophosphate. When the fluorine-containing additive is a fluorine-containing lithium salt, based on the total mass of the electrolyte solution, the mass percent of the fluorine-containing lithium salt is 10% to 30%, for example, may be 10%, 12%, 15%, 18%, 21%, 24%, 27%, 30%, or a value falling within a range formed by any two thereof. Without being limited to any theory, the applicant hereof finds that, by selecting the above fluorine-containing additive, this application can further enhance the cycle performance and safety performance of the electrochemical device.

In an embodiment of this application, a porosity of the positive electrode plate is D%, a value range of D is 5 ≤ D ≤ 35. For example, D may be 5, 10, 15, 20, 25, 30, 35, or a value falling within a range formed by any two thereof. A relation between D% and A% is: 0.5 ≤ D%/A% ≤ 15. For example, D%/A% may be 0.5, 1, 3, 5, 7, 9, 12, 15, or a value falling within a range formed by any two thereof. The applicant hereof finds through research that, by controlling the porosity of the positive electrode plate to fall within the above range, and by controlling the porosity and the mass percent of the electrolyte solution together, the electrolyte solution can sufficiently infiltrate the pores under the condition of a high compaction density, and can provide enough electronic paths without bringing about many by-products, thereby

enhancing the cycle performance and safety performance of the electrochemical device.

In an embodiment of this application, a sum of a mass percent of sulfur and a mass percent of fluorine in an SEI film on a surface of the negative electrode plate is E%, satisfying: $10 \leq E \leq 50$. For example, E may be 10, 15, 20, 25, 30, 35, 40, 45, 50, or a value falling within a range formed by any two thereof. The applicant hereof finds through research that, when the value of E is unduly high (for example, E is greater than 50), the interfacial kinetics of the electrochemical device deteriorates, and in turn, the cycle performance deteriorates. When the value of E is unduly low (for example, E is less than 10), the stability of the SEI film decreases, and the cycle performance and safety performance deteriorate. The cycle performance and safety performance of the electrochemical device can be further enhanced by controlling the value of E to fall within the above range.

A second aspect of this application provides an electronic device. The electronic device includes the electrochemical device disclosed in the first aspect of this application. The electrochemical device of this application exhibits good cycle performance and safety performance, and therefore, the electronic device disclosed in this application exhibits a long lifespan and good performance.

This application provides an electrochemical device and an electronic device. By controlling the mass percent of the electrolyte solution in the electrochemical device and the use of the sulfur-containing substance and the fluorine-containing additive, this application improves the ionic conductivity of the SEI film, and reduces consumption of the electrolyte solution during cycling. By defining the relation between the porosity and the electrolyte retention rate, this application enhances safety performance and cycle performance while reducing the electrolyte volume.

## DETAILED DESCRIPTION OF EMBODIMENTS

To make the objectives, technical solutions, and advantages of this application clearer, the following describes this application in more detail with reference to embodiments. Evidently, the described embodiments are merely a part of but not all of the embodiments of this application. All other embodiments derived by a person of ordinary skill in the art based on the embodiments of this application fall within the protection scope of this application.

It is hereby noted that in specific embodiments of this application, this application is construed by using a lithium-ion battery as an example of the electrochemical device, but the electrochemical device according to this application is not limited to the lithium-ion battery.

The positive electrode plate is not particularly limited in this application, as long as the objectives of this application can be achieved. The positive electrode plate typically includes a positive current collector and a positive active material. The positive current collector is not particularly limited, and may be any positive current collector well known in the art, such as aluminum foil, aluminum alloy foil, a composite current collector, or the like. The positive active material is not particularly limited, and may be any positive active material in the prior art. For example, the positive active material may include at least one of lithium nickel cobalt manganese oxide, lithium nickel cobalt aluminum oxide, lithium iron phosphate, lithium cobalt oxide, lithium manganese oxide, or lithium manganese iron phosphate.

The thicknesses of the positive current collector and the positive active material are not particularly limited in this application, as long as the objectives of this application can be achieved. For example, the thickness of the positive current collector is 8 μm to 12 μm, and the thickness of the positive active material is 30 μm to 120 μm.

In this application, the positive material layer may further include a conductive agent. The conductive agent is not particularly limited in this application, as long as the objectives of this application can be achieved. For example, the conductive agent may include, but is not limited to, at least one of conductive carbon black (Super P), carbon nanotubes (CNTs), carbon fibers, flake graphite, Ketjen black, graphene, a metal material, or a conductive polymer. The carbon nanotubes may include, but are not limited to, single-walled carbon nanotubes and/or multi-walled carbon nanotubes. The carbon fibers may include, but are not limited to, vapor grown carbon fibers (VGCF) and/or carbon nanofibers. The metal material may include, but is not limited to, metal powder and/or metal fibers. Specifically, the metal may include, but is not limited to, at least one of copper, nickel, aluminum, or silver. The conductive polymer may include, but is not limited to, at least one of polyphenylene derivatives, polyaniline, polythiophene, polyacetylene, or polypyrrole.

Optionally, the positive electrode may further include a conductive layer. The conductive layer is located between the positive current collector and the positive material layer. The constituents of the conductive layer are not particularly limited herein, and may be a conductive layer commonly used in the art. For example, the conductive layer may include, but is not limited to, the foregoing conductive agent and binder.

The negative current collector is not particularly limited in this application, and may be made of a material such as a metal foil or a porous metal sheet. For example, the negative current collector is a foil or porous plate made of a metal such as copper, nickel, titanium, or iron, or an alloy thereof, such as a copper foil. The negative active material layer includes a negative active material, a conductive agent, a binder, and a thickener. The binder may be at least one of styrene-butadiene rubber (SBR), polyvinylidene difluoride (PVDF), polytetrafluoroethylene (PTFE), polyvinyl butyral (PVB), water-based acrylic resin (water-based acrylic resin), or carboxymethyl cellulose (CMC). The thickener may be carboxymethyl cellulose.

In this application, the negative material layer may further include a conductive agent. The conductive agent is not particularly limited in this application, as long as the objectives of this application can be achieved. For example, the conductive agent may include, but is not limited to, at least one of the foregoing conductive agents.

In this application, the negative material layer may further include a binder. The binder is not particularly limited in this application, as long as the objectives of this application can be achieved. For example, the binder may include, but is not limited to, at least one of the foregoing binders.

Optionally, the negative electrode may further include a conductive layer. The conductive layer is located between the negative current collector and the negative material layer. The constituents of the conductive layer are not particularly limited herein, and may be a conductive layer commonly used in the art. The conductive layer may include, but is not limited to, the foregoing conductive agent and binder.

The separator in this application is not particularly limited herein, as long as the objectives of this application can be achieved. The substrate of the separator may be at least one selected from polyethylene (PE), polypropylene (PP), polyethylene terephthalate (PET), polyimide (PI), or aramid fiber. For example, the polyethylene includes at least one constituent selected from high-density polyethylene, low-density polyethylene, or ultra-high-molecular-weight polyethylene. Especially, the polyethylene and the polypropylene are highly effective in preventing short circuits, and can improve stability of the electrochemical device through a turn-off effect. The separator according to this application may be a porous structure. The pore size of the separator is not particularly limited, as long as the objectives of this application can be achieved. For example, the pore size may be 0.01 μm to 1 μm. The thickness of the separator is not particularly limited in this application, as long as the objectives of this application can be achieved. For example, the thickness may be 5 μm to 500 μm.

In this application, the electrolyte solution may further include a nonaqueous solvent. The nonaqueous solvent is not particularly limited in this application, as long as the objectives of this application can be achieved. For example, the nonaqueous solvent may include, but is not limited to, at least one of a carbonate compound, a carboxylate compound, an ether compound, or other organic solvents. The carbonate compound may include, but is not limited to, at least one of a chain carbonate compound or a cyclic carbonate compound. The chain carbonate compound may include, but is not limited to, at least one of dimethyl carbonate (DMC), diethyl carbonate (DEC), dipropyl carbonate (DPC), methyl propyl carbonate (MPC), ethylene propyl carbonate (EPC), or ethyl methyl carbonate (EMC). The cyclic carbonate compound may include, but is not limited to, at least one of ethylene carbonate (EC), propylene carbonate (PC), butylene carbonate (BC), or vinyl ethylene carbonate (VEC). The carboxylate compound may include, but is not limited to, at least one of methyl formate, methyl acetate, ethyl acetate, n-propyl acetate, tert-butyl acetate, methyl propionate, ethyl propionate, propyl propionate, γ-butyrolactone, decanolactone, valerolactone, mevalonolactone, or caprolactone. The ether compound may include, but is not limited to, at least one of dibutyl ether, tetraglyme, diglyme, 1,2-dimethoxyethane, 1,2-diethoxyethane, ethoxymethoxyethane, 2-methyltetrahydrofuran, or tetrahydrofuran. The other organic solvents may include, but are not limited to, at least one of dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, or phosphate ester. Based on the total mass of the electrolyte solution, the aggregate mass percent of the other nonaqueous solvents is 10% to 80%, for example, may be 10%, 15%, 20%, 30%, 35%, 40%, 45%, 50%, 55%, 60%, 65%, 70%, 75%, 80%, or a value falling within a range formed by any two thereof.

In this application, the electrolyte solution may further include a lithium salt. The lithium salt includes, but is not limited to, at least one of lithium hexafluorophosphate, lithium bis(trifluoromethylsulfonyl)imide, lithium bis(fluorosulfonyl)imide, lithium difluoro(oxalato)borate, lithium tetrafluoroborate, lithium trifluoromethanesulfonate, lithium difluorophosphate, lithium hexafluoroarsenate, lithium dioxaloborate, or lithium perchlorate. The mass percent of the lithium salt is not particularly limited herein, as long as the objectives of this application can be achieved. Based on the total mass of the electrolyte solution, the aggregate mass percent of the lithium salt is 10% to 37.5%, for example, may be 10%, 12%, 14%, 16%, 18%, 20%, 30%, 37.5%, or a value falling within a range formed by any two thereof. When the fluorine-containing lithium salt serves as both a fluorine-containing additive and a lithium salt, the mass percent of the fluorine-containing lithium salt is 10% to 30%, for example, may be 10%, 12%, 14%, 16%, 18%, 20%, 30%, or a value falling within a range formed by any two thereof.

The electronic device in this application is not particularly limited, and may be any electronic device known in the prior art. In some embodiments, the electronic device may include, but not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

The preparation process of the electrochemical device is well known to a person skilled in the art, and is not particularly limited in this application. For example, a process of manufacturing a lithium-ion battery may include: stacking a positive electrode and a negative electrode that are separated by a separator, performing operations such as winding

and folding as required, placing them into a housing, injecting an electrolyte solution into the housing, and sealing the housing. In addition, an overcurrent prevention element, a guide plate, and the like may be further placed into the housing as required, so as to prevent the rise of internal pressure, overcharge, and overdischarge of the lithium-ion battery.

The implementations of this application are described below in more detail with reference to embodiments and comparative embodiments. Various tests and evaluations are performed by the following methods. In addition, unless otherwise specified, the word "parts" means parts by mass, and the symbol "%" means a percentage by mass.

**Specific Test Methods and Devices**

**Method for testing the cycle capacity retention rate:**

Putting a lithium-ion battery in a 25 °C thermostat, charging the battery at a constant current of 0.5 C until the voltage reaches 4.5 V, charging the battery at a constant voltage until the current drops to 0.05 C, and discharging the battery at a constant current of 1.0 C until the voltage reaches 3.0 V, thereby completing one charge-discharge cycle. Repeating the foregoing steps to complete 500 charge-discharge cycles, and monitoring the capacity retention rate.

Capacity retention rate = [remaining discharge capacity/initial discharge capacity] × 100%.

**Hot-oven test method:**

Charging a lithium-ion battery at a constant current of 0.5 C at a temperature of 20±5 °C until the voltage reaches 4.2 V, charging the battery at a constant voltage of 4.2 V until the current drops to 0.05 C, and setting the oven temperature to 25 °C. Leaving the lithium-ion battery to stand for 30 minutes, increasing the temperature to a specified temperature with a tolerance of ±2 °C at a speed of 5±2 °C/min, and keeping the specified temperature for 60 minutes. Monitoring the changes in the voltage, the surface temperature of the lithium-ion battery, and the oven temperature in the process, and checking for electrolyte leakage, fire, and explosion.

**Drop test method:**

Charging a lithium-ion battery at a constant current of 0.5 C at a temperature of 20±5 °C until the voltage reaches 4.2 V, charging the battery at a constant voltage of 4.2 V until the current drops to 0.05 C, and then dropping the battery freely down onto a smooth marble surface from a height of 1.5 m with the following parts facing the marble surface successively: front side-back side-lower side-upper side-left side-right side-top left corner-top right corner-bottom left corner-bottom right corner. Repeating the above steps to drop the battery for 10 rounds, where one round is completed whenever all surfaces/angles of the battery have been dropped for one time consecutively. Checking the status of the battery. Recording the voltage and internal resistance of the lithium-ion battery after the test, the change in the surface temperature of the lithium-ion battery, and occurrences of electrolyte leakage, fire, and explosion.

**Method for testing the porosity:**

Testing the porosity of the positive electrode plate by a gas displacement method: the porosity is a percentage of the pore volume of a specimen in the total volume of the specimen, denoted as P%.

Die-cutting a positive electrode plate test-piece into regularly shaped small discs of a fixed size (diameter d = 10 mm) serving as specimens. Weighing out some small disc specimens of a specified mass, placing the specimens into a true density meter (AccuPyc II 1340). Closing the test system hermetically, passing an inert gas into the test system, and measuring the true volume $V_0$ of the specimen. Calculating the apparent volume V of the specimen based on the area and thickness of the small disc specimen. Calculating the porosity of the electrode plate as:

$$P\% = [(V - V0)/V] \times 100\%.$$

**Measuring the mass of the electrolyte solution:**

Disassembling a lithium-ion battery, putting the battery into a specimen box, and pouring dimethyl carbonate (DMC) into the specimen box so that the electrode plate of the battery is completely immersed in the DMC solution.

Keeping the soakage for 8 hours, and then replacing the solution with a fresh DMC solution and continuing to soak the electrode plate overnight (for 14 h). Moving the soaked lithium-ion battery out and into a beaker, and putting the beaker into a vacuum oven for baking overnight (for 14 h). Calculating the mass percent of the electrolyte solution in the lithium-ion battery based on the difference between the mass of the battery cell before the soakage of the lithium-ion battery and the mass of the dried battery cell:

Mass percent of the electrolyte solution = mass of the electrolyte solution/mass of the lithium-ion battery × 100%.

**Method for determining the content of elements in an SEI film:**

Discharging the lithium-ion battery in an argon atmosphere glovebox with a moisture content less than 10 ppm, disassembling the lithium-ion battery to obtain a negative electrode plate. Washing away the residual electrolyte solution on the surface of the electrode plate by using dimethyl carbonate (DMC). Air-drying the electrode plate, and placing the electrode plate into a specimen chamber of an X-ray photoelectron spectrometer (XPS). Selecting a flat and even surface region of a particle of the material to determine the X-ray photoelectron spectrum of the particle. Correcting each raw XPS signal with reference to the $C_{1s}$ peak position 284.8 eV, and calibrating the peaks exhibited in the spectrum. Calculating the integral of the area under the curve of each peak in the XPS spectrum, and normalizing the data to obtain a percentage content of each different element.

**Embodiment 1**

**(1) Preparing an electrolyte solution**

Mixing ethylene carbonate (EC), propylene carbonate (PC), and ethyl propionate (EP) evenly at a mass ratio of 1: 1: 1 in an argon-atmosphere glovebox in which the moisture content is less than 10 ppm, so as to form a base solvent. Subsequently, adding a sulfur-containing substance and $LiPF_6$ according to Table 1 to dissolve, and stirring well to form an electrolyte solution. Finally, based on the total mass of the electrolyte solution, the mass percent of $LiPF_6$ is 12.5%, and the remainder is the base solvent.

**(2) Preparing a positive electrode plate**

Mixing lithium cobalt oxide ($LiCoO_2$) as a positive active material, acetylene black as a conductive agent, and polyvinylidene difluoride (PVDF) as a binder at a mass ratio of 96: 2: 2. Adding N-methyl-pyrrolidone (NMP) as a solvent to formulate a slurry in which the solid content is 75%. Stirring the mixed system with a vacuum mixer until the system becomes a homogeneous positive electrode slurry. Coating one surface of a 10 μm-thick positive current collector aluminum foil with the positive electrode slurry evenly, and drying the slurry in a 90 °C environment to obtain a positive electrode plate coated with a 110 μm-thick positive active material layer on a single side. The coating on a single side of the positive electrode plate is completed upon completion of the above steps. Subsequently, repeating the above steps on the other surface of the positive electrode plate to obtain a positive electrode plate coated with a positive active material on both sides. After completion of the coating, cold-pressing the positive electrode plate, and cutting the positive electrode plate into a size of 74 mm × 867 mm for future use. As tested, the porosity of the positive electrode plate is 15%.

**(3) Preparing a negative electrode plate**

Mixing graphite as a negative active material, styrene-butadiene rubber as a binder, and sodium carboxymethyl cellulose as a thickener at a mass ratio of 97.4: 1.4: 1.2, adding deionized water as a solvent to formulate a negative electrode slurry in which the solid content is 70%, and stirring well with a vacuum mixer until the system becomes a homogeneous negative electrode slurry. Applying the negative electrode slurry evenly onto one surface of 8 μm-thick negative current collector copper foil, and drying the foil at 90 °C to obtain a negative electrode plate coated with a 130 μm-thick negative active material layer on a single side. The coating on a single side of the negative electrode plate is completed upon completion of the above steps. Subsequently, repeating the foregoing steps on the other surface of the negative electrode plate to obtain a negative electrode plate coated with the negative active material on both sides. Cold-pressing the negative electrode plate after completion of the coating, and cutting the electrode plate into a size of 76 mm × 851 mm for future use. The compaction density of the negative electrode plate is 1.8 g/$cm^3$.

**(4) Separator**

A polyethylene (PE) porous polymer film serves as a separator.

**(5) Preparing a lithium-ion battery**

Stacking the positive electrode plate, the separator, and the negative electrode plate sequentially, letting the separator be located between the positive electrode plate and the negative electrode plate to serve a separation function, and then winding the plates. Affixing adhesive tape to the tail end, putting the wound structure into a molded aluminum foil bag. Sealing the edges of the aluminum foil bag, and then drying the aluminum foil bag in an 85 °C vacuum oven for 12 hours to remove the moisture in the battery cell. Finally, injecting the prepared electrolyte solution into the vacuum-dried battery, and performing steps such as vacuum packaging, standing, chemical formation, and shaping to complete preparing the lithium-ion battery.

**Embodiments 2 to 16**

Identical to Embodiment 1 except that the mass percent of the electrolyte solution and the type and the mass percent of the sulfur-containing substance are adjusted according to Table 1.

**Comparative Embodiments 1 to 5**

Identical to Embodiment 1 except that the mass percent of the electrolyte solution and the type and the mass percent of the sulfur-containing substance are adjusted according to Table 1.

**Table 1**

| | A (%) | Sulfur-containing substance | B (%) | 500th-cycle capacity retention rate (%) | Hot-oven test (°C) | Drop test pass rate |
|---|---|---|---|---|---|---|
| Embodiment 1 | 2 | 2,4-butane sultone | 12 | 75.5 | 137 | 8/10 |
| Embodiment 2 | 3 | 2,4-butane sultone | 12 | 80.2 | 135 | 8/10 |
| Embodiment 3 | 5 | 2,4-butane sultone | 12 | 87.9 | 134 | 7/10 |
| Embodiment 4 | 8 | 2,4-butane sultone | 12 | 86.8 | 131 | 6/10 |
| Embodiment 5 | 5 | 1,3-propane sultone | 12 | 83.5 | 131 | 7/10 |
| Embodiment 6 | 5 | Ethylene sulfite | 12 | 83.2 | 135 | 6/10 |
| Embodiment 7 | 5 | 2,4-butane sultone<br>1,3-propane sultone | 5<br>5 | 88.9 | 127 | 7/10 |
| Embodiment 8 | 5 | 1,3-propane sultone<br>Ethylene sulfite | 7.5<br>7.5 | 87.8 | 127 | 6/10 |
| Embodiment 9 | 5 | 2,4-butane sultone<br>Ethylene sulfite | 7.5<br>7.5 | 85.1 | 129 | 7/10 |
| Embodiment 10 | 8 | 2,4-butane sultone<br>Propylene sulfite | 7.5<br>7.5 | 84.6 | 127 | 6/10 |
| Embodiment 11 | 8 | 2,4-butane sultone<br>1,3-propane sultone<br>Ethylene sulfite | 5<br>5<br>5 | 82.7 | 128 | 6/10 |
| Embodiment 12 | 5 | 2,4-butane sultone<br>1,3-propane sultone<br>Ethylene sulfite | 4<br>4<br>4 | 82.3 | 136 | 6/10 |

(continued)

| | A (%) | Sulfur-containing substance | B (%) | $500^{th}$-cycle capacity retention rate (%) | Hot-oven test (°C) | Drop test pass rate |
|---|---|---|---|---|---|---|
| Embodiment 13 | 5 | 2,4-butane sultone<br>1,3-propane sultone<br>Ethylene sulfite | 5<br>5<br>5 | 84.8 | 134 | 8/10 |
| Embodiment 14 | 8 | 2,4-butane sultone<br>1,3-propane sultone<br>Ethylene sulfite | 6<br>6<br>6 | 88.9 | 133 | 7/10 |
| Embodiment 15 | 8 | 2,4-butane sultone<br>1,3-propane sultone<br>Ethylene sulfite | 7<br>7<br>6 | 83.4 | 128 | 6/10 |
| Embodiment 16 | 8 | 2,4-butane sultone<br>1,3-propane sultone<br>Propylene sulfite | 5<br>5<br>5 | 83.2 | 125 | 6/10 |
| Comparative Embodiment 1 | 1 | 2,4-butane sultone | 12 | 66.7 | 138 | 9/10 |
| Comparative Embodiment 2 | 9 | 2,4-butane sultone | 12 | 87.5 | 129 | 3/10 |
| Comparative Embodiment 3 | 8 | 2,4-butane sultone<br>1,3-propane sultone<br>Ethylene sulfite | 3<br>3<br>3 | 80.1 | 120 | 3/10 |
| Comparative Embodiment 4 | 8 | 2,4-butane sultone<br>1,3-propane sultone<br>Ethylene sulfite | 8<br>8<br>8 | 81.5 | 122 | 3/10 |
| Comparative Embodiment 5 | 8 | / | / | 65.5 | 115 | 1/10 |
| Note: "/" in Table 1 indicates that the relevant preparation parameter does not exist. | | | | | | |

As can be seen from Embodiments 1 to 16, the cycle performance and safety performance of the lithium-ion battery vary with the mass percent of the electrolyte solution and the sulfur-containing substance. The mass percent of the electrolyte solution generally affects the cycle performance and safety performance of the lithium-ion battery. As can be seen from Embodiments 1 to 4 and Comparative Embodiments 1 to 2, when the mass percent of the electrolyte solution falls within the range specified herein, the lithium-ion battery exhibits good cycle performance and safety performance.

The type and mass percent of the sulfur-containing substance generally also affect the cycle performance and safety performance of the lithium-ion battery. As can be seen from Embodiments 5 to 16 and Comparative Embodiments 3 to 5, when the type and mass percent of the sulfur-containing substance fall within the ranges specified herein, the lithium-ion battery exhibits good cycle performance and safety performance.

**Embodiments 17 to 30**

Identical to Embodiment 1 except that the mass percent of the electrolyte solution, the type and the mass percent of the sulfur-containing additive, and the aggregate mass percent E% of the elements S and F in the SEI film are adjusted according to Table 2.

**Comparative Embodiment 6**

Identical to Embodiment 1 except that the mass percent of the electrolyte solution, the type and the mass percent of the fluorine-containing additive, and the aggregate mass percent E% of the elements S and F in the SEI film are adjusted according to Table 2.

**Table 2**

| | A (%) | Fluorine-containing additive | C (%) | E% (aggregate mass percent of S and F) | $500^{th}$-cycle capacity retention rate (%) | Hot-oven test (°C) | Drop test pass rate |
|---|---|---|---|---|---|---|---|
| Embodiment 17 | 5 | Fluoroethylene carbonate<br>Diethyl fluorocarbonate<br>II A + II D | 7.5<br>7.5 | 11.2 | 78.7 | 129 | 4/10 |
| Embodiment 18 | 5 | Fluoroethyl methyl carbonate<br>Diethyl fluorocarbonate<br>II B + II D | 10<br>10 | 17.7 | 82.5 | 131 | 5110 |
| Embodiment 19 | 5 | Dimethyl fluorocarbonate<br>Diethyl fluorocarbonate<br>II C + II D | 10<br>10 | 16.8 | 79.2 | 131 | 5110 |
| Embodiment 20 | 5 | Fluoroethylene carbonate<br>Fluoroethyl methyl carbonate<br>Diethyl fluorocarbonate<br>II A + II B + II D | 5<br>5<br>5 | 19.4 | 86.6 | 133 | 7/10 |
| Embodiment 24 | 5 | Fluoroethyl methyl carbonate<br>Dimethyl fluorocarbonate<br>Diethyl fluorocarbonate<br>II B + II C + II D | 10<br>5<br>5 | 20.3 | 87.8 | 135 | 8/10 |
| Embodiment 22 | 5 | Fluoroethylene carbonate<br>Dimethyl fluorocarbonate<br>Diethyl fluorocarbonate<br>II A + II C + II D | 10<br>5<br>5 | 22.4 | 84.1 | 135 | 7/10 |
| Embodiment 23 | 8 | Fluoroethylene carbonate<br>Diethyl fluorocarbonate<br>Fluoroethyl propionate<br>II A + II D + II E | 10<br>5<br>5 | 21.7 | 83.6 | 132 | 6/10 |

(continued)

| | A (%) | Fluorine-containing additive | C (%) | E% (aggregate mass percent of S and F) | $500^{th}$-cycle capacity retention rate (%) | Hot-oven test (°C) | Drop test pass rate |
|---|---|---|---|---|---|---|---|
| Embodiment 24 | 8 | Fluoroethylene carbonate<br>Fluoroethyl methyl carbonate<br>Dimethyl fluorocarbonate<br>Fluoroethyl propionate<br>II A + II B + II C + II E | 5<br>5<br>5<br>5 | 21.3 | 82.7 | 135 | 8/10 |
| Embodiment 25 | 5 | Fluoroethylene carbonate<br>Fluoroethyl methyl carbonate<br>Dimethyl fluorocarbonate<br>Fluoroethyl propionate<br>II A + II B + II C + II E | 5<br>5<br>5<br>3 | 20.1 | 82.3 | 136 | 6/10 |
| Embodiment 26 | 5 | Fluoroethylene carbonate<br>Fluoroethyl methyl carbonate<br>Dimethyl fluorocarbonate, diethyl fluorocarbonate<br>II A + II B + II C + II D | 10<br>5<br>5<br>5 | 30.1 | 84.8 | 134 | 8/10 |
| Embodiment 27 | 8 | Fluoroethylene carbonate<br>Fluoroethyl methyl carbonate<br>Dimethyl fluorocarbonate, diethyl fluorocarbonate<br>II A + II B + II C + II D | 10<br>5<br>5<br>5 | 29.7 | 88.9 | 134 | 7/10 |
| Embodiment 28 | 8 | Fluoroethylene carbonate<br>Fluoroethyl methyl carbonate<br>Dimethyl fluorocarbonate, fluoroethyl propionate<br>II A + II B + II C + II E | 10<br>10<br>5<br>5 | 35.1 | 83.4 | 128 | 6/10 |

(continued)

| | A (%) | Fluorine-containing additive | C (%) | E% (aggregate mass percent of S and F) | 500th-cycle capacity retention rate (%) | Hot-oven test (°C) | Drop test pass rate |
|---|---|---|---|---|---|---|---|
| Embodiment 29 | 8 | Fluoroethylene carbonate<br>Fluoroethyl methyl carbonate<br>Diethyl fluorocarbonate<br>Fluoroethyl propionate<br>IIA + II B + II D + II E | 5<br>5<br>5<br>5 | 22.4 | 86.2 | 125 | 6/10 |
| Embodiment 30 | 8 | Fluoroethylene carbonate<br>Fluoroethyl methyl carbonate<br>Diethyl fluorocarbonate<br>Fluoroethyl propionate<br>IIA + II B + II D + II E | 10<br>10<br>5<br>5 | 40.2 | 81.1 | 126 | 5110 |
| Comparative Embodiment 6 | 8 | Fluoroethylene carbonate<br>Fluoroethyl methyl carbonate<br>Diethyl fluorocarbonate<br>IIA + II B + II D | 15<br>10<br>10 | 49.5 | 76.5 | 122 | 3/10 |

As can be seen from Embodiments 17 to 30, the cycle performance and safety performance of the lithium-ion battery vary with the fluorine-containing additive. As can be seen from Embodiments 17 to 30 and Comparative Embodiment 6, when the mass percent of the fluorine-containing additive falls within the range specified herein, the lithium-ion battery exhibits good cycle performance and safety performance.

As can be seen from Embodiments 18 to 20 and Embodiments 21 to 24, when three types of fluorine-containing additives are selected to work synergistically, the cycle performance and safety performance of the lithium-ion battery can be further improved.

**Embodiments 31 to 42**

Identical to Embodiment 1 except that the mass percent of the electrolyte solution and the porosity of the positive electrode plate are adjusted according to Table 3 on the basis of Embodiment 1.

**Table 3**

| | A (%) | D (%) | D%/A% | 500th-cycle capacity retention rate (%) | Hot-oven test (°C) | Drop test pass rate |
|---|---|---|---|---|---|---|
| Embodiment 31 | 5 | 5 | 1 | 82.3 | 131 | 4/10 |
| Embodiment 32 | 5 | 10 | 2 | 85.5 | 131 | 4/10 |

(continued)

| | A (%) | D (%) | D%/A% | 500th-cycle capacity retention rate (%) | Hot-oven test (°C) | Drop test pass rate |
|---|---|---|---|---|---|---|
| Embodiment 33 | 5 | 15 | 3 | 88.2 | 135 | 8/10 |
| Embodiment 34 | 5 | 20 | 4 | 86.9 | 133 | 7/10 |
| Embodiment 35 | 5 | 25 | 5 | 87.8 | 130 | 6/10 |
| Embodiment 36 | 5 | 30 | 6 | 85.1 | 129 | 3/10 |
| Embodiment 37 | 8 | 5 | 0.63 | 78.6 | 129 | 4/10 |
| Embodiment 38 | 8 | 10 | 1.25 | 82.7 | 128 | 7/10 |
| Embodiment 38 | 8 | 15 | 1.88 | 82.3 | 136 | 9/10 |
| Embodiment 40 | 8 | 20 | 2.5 | 84.8 | 134 | 8/10 |
| Embodiment 41 | 8 | 25 | 3.13 | 88.9 | 133 | 7/10 |
| Embodiment 42 | 8 | 30 | 3.75 | 86.4 | 128 | 6/10 |

As can be seen from Embodiments 31 to 42, the cycle performance and safety performance of the lithium-ion battery vary with the porosity of the positive electrode plate. When the porosity and the ratio of the porosity to the mass percent of the electrolyte solution fall within the ranges specified herein, the lithium-ion battery exhibits good cycle performance.

What is described above is merely exemplary embodiments of this application, but is not intended to limit this application. Any modifications, equivalent replacements, improvements, and the like made without departing from the spirit and principles of this application still fall within the protection scope of this application.

## Claims

1. An electrochemical device, comprising a positive electrode plate, a negative electrode plate, an electrolyte solution, and a separator, wherein a mass percent A of the electrolyte solution in a total mass of a battery cell is 2% to 8%; the electrolyte solution comprises a sulfur-containing substance; and, based on a total mass of the electrolyte solution, a mass percent B of the sulfur-containing substance is 10% to 20%.

2. The electrochemical device according to claim 1, wherein the sulfur-containing substance is at least one selected from compounds represented by the following formulas:

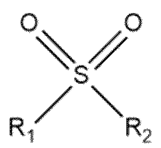
(I-A)

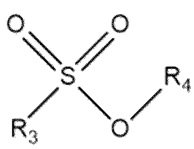
(I-B)

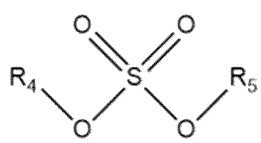
(I-C)

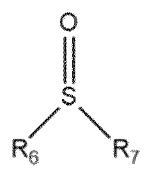
(I-D)

$R_1$, $R_2$, $R_3$, $R_4$, $R_5$, $R_6$, and $R_7$ each are any one independently selected from $C_1$ to $C_{10}$ saturated hydrocarbyl, $C_2$ to $C_{10}$ unsaturated hydrocarbyl, $C_1$ to $C_{10}$ haloalkyl, $C_2$ to $C_{10}$ haloalkenyl, $C_2$ to $C_{10}$ haloalkynyl, $C_6$ to $C_{26}$ aryl, -F, -Cl, or-H; and

$R_1$ and $R_2$, $R_3$ and $R_4$, $R_5$ and $R_6$, and $R_7$ and $R_8$ are able to be connected to form rings respectively.

3. The electrochemical device according to claim 1, wherein the sulfur-containing substance comprises at least one of 2,4-butanesultone, 1,3-propanesultone, ethylene sulfite, propylene sulfite, dimethyl sulfite, or diethyl sulfite.

**4.** The electrochemical device according to claim 1, wherein the electrolyte solution comprises a fluorine-containing additive, and, based on the total mass of the electrolyte solution, a mass percent C of the fluorine-containing additive is 15% to 30%.

**5.** The electrochemical device according to claim 4, wherein the fluorine-containing additive is at least one selected from compounds represented by the following formulas:

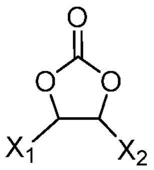 , 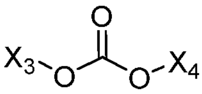 , 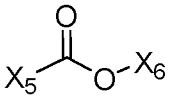 ,

(II-A) (II-B) (II-C)

$Y_1Fn^{-}Li^{+}$, (II-D)

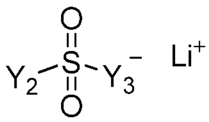

(II-E)

wherein, $X_1$, $X_2$, $X_3$, $X_4$, $X_5$, and $X_6$ each are any one independently selected from $C_1$ to $C_{10}$ fluorinated saturated hydrocarbyl, $C_2$ to $C_{10}$ fluorinated unsaturated hydrocarbyl, $C_1$ to $C_{10}$ haloalkyl, $C_2$ to $C_{10}$ haloalkenyl, $C_2$ to $C_{10}$ haloalkynyl, $C_6$ to $C_{26}$ aryl, -F, or -H;
$Y_1$ comprises P, B, O, N, or S;
$Y_2$ and $Y_3$ each are any one independently selected from $C_1$ to $C_{10}$ fluorinated saturated hydrocarbyl, $C_2$ to $C_{10}$ fluorinated unsaturated hydrocarbyl, P, B, O, S, or N;
at least one of $X_1$ and $X_2$, $X_3$ and $X_4$, $X_5$ and $X_6$, or $Y_2$ and $Y_3$ is a fluorine-containing group; and
$X_1$ and $X_2$, $X_3$ and $X_4$, $X_5$ and $X_6$, and $Y_2$ and $Y_3$ are able to be connected to form rings respectively.

**6.** The electrochemical device according to claim 4, wherein the fluorine-containing additive comprises at least one of fluoroethylene carbonate, fluoroethyl methyl carbonate, fluorodimethyl carbonate, fluorodiethyl carbonate, ethyl fluoropropionate, propyl fluoropropionate, ethyl fluoroacetate, lithium hexafluorophosphate, lithium bis(trifluoromethylsulfonyl)imide, lithium bis(fluorosulfonyl)imide, lithium difluoro(oxalato)borate, lithium tetrafluoroborate, lithium trifluoromethanesulfonate, or lithium difluorophosphate.

**7.** The electrochemical device according to claim 1, wherein a porosity of the positive electrode plate is D%, a value range of D is $5 \leq D \leq 35$, and a relation between D% and A% is: $0.5 \leq D\%/A\% \leq 15$.

**8.** The electrochemical device according to claim 1, wherein a sum of a mass percent of sulfur and a mass percent of fluorine in an SEI layer on a surface of the negative electrode plate is E%, satisfying: $10 \leq E \leq 50$.

**9.** An electronic device, comprising the electrochemical device according to any one of claims 1 to 8.

**INTERNATIONAL SEARCH REPORT**

International application No. **PCT/CN2022/074549**

**A. CLASSIFICATION OF SUBJECT MATTER**

H01M 10/0566(2010.01)i; H01M 10/0567(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, WPABSC, ENTXTC, VEN, ENTXT, DWPI, CNKI, CJFD: 电解液, 电解质, 液体, 液态, 质量, 用量, 含量, 重量, 克, 加入, 注入, 电池, 电芯, 芯子, 单体, 准固态, 类固态, 半固态, 添加剂, 硫, 硫化物, 亚砜, 砜, 硫酸, 磺酸, S=O, SO?, 氟, 孔隙率, 孔隙度, 空隙率; electrolyte, liquid, mass, content, weight, gram, inject+, battery, cell, core, nearly , half, solid, can, additive, sulfur+, sulfon+, fluorine, porosity

**C. DOCUMENTS CONSIDERED TO BE RELEVANT**

| Category* | Citation of document, with indication, where appropriate, of the relevant passages | Relevant to claim No. |
|---|---|---|
| Y | CN 112886052 A (KUNSHAN BAOCHUANG NEW ENERGY TECHNOLOGY CO., LTD.) 01 June 2021 (2021-06-01)<br>description, paragraphs 5-71 | 1-9 |
| Y | CN 109309256 A (NINGDE CONTEMPORARY AMPEREX TECHNOLOGY CO., LTD.) 05 February 2019 (2019-02-05)<br>description, paragraphs 5-22 | 1-9 |
| A | CN 101807710 A (SAMSUNG SDI CO., LTD.) 18 August 2010 (2010-08-18)<br>description, paragraphs 39-113 | 1-9 |
| A | JP 2000123868 A (HITACHI MAXELL LTD et al.) 28 April 2000 (2000-04-28)<br>entire document | 1-9 |
| A | CN 105359325 A (SK INNOVATION CO., LTD.) 24 February 2016 (2016-02-24)<br>entire document | 1-9 |
| A | CN 1971999 A (BYD CO., LTD.) 30 May 2007 (2007-05-30)<br>entire document | 1-9 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **22 July 2022** | **29 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2022/074549**

**C. DOCUMENTS CONSIDERED TO BE RELEVANT**

| Category* | Citation of document, with indication, where appropriate, of the relevant passages | Relevant to claim No. |
|---|---|---|
| A | CN 1866604 A (SHOUTIANEN BUSINESS MANAGEMENT CO., LTD.) 22 November 2006 (2006-11-22)<br>entire document | 1-9 |

Form PCT/ISA/210 (second sheet) (January 2015)

**INTERNATIONAL SEARCH REPORT**
**Information on patent family members**

International application No.
**PCT/CN2022/074549**

| Patent document cited in search report | | | Publication date (day/month/year) | Patent family member(s) | | | Publication date (day/month/year) |
|---|---|---|---|---|---|---|---|
| CN | 112886052 | A | 01 June 2021 | None | | | |
| CN | 109309256 | A | 05 February 2019 | None | | | |
| CN | 101807710 | A | 18 August 2010 | KR | 20100093375 | A | 25 August 2010 |
| | | | | JP | 2010192438 | A | 02 September 2010 |
| | | | | US | 2010209765 | A1 | 19 August 2010 |
| | | | | EP | 2219247 | A1 | 18 August 2010 |
| | | | | KR | 101094937 | B1 | 15 December 2011 |
| | | | | US | 8394533 | B2 | 12 March 2013 |
| | | | | CN | 101807710 | B | 27 March 2013 |
| | | | | JP | 5291020 | B2 | 18 September 2013 |
| | | | | EP | 2219247 | B1 | 25 March 2015 |
| JP | 2000123868 | A | 28 April 2000 | JP | 3953207 | B2 | 08 August 2007 |
| CN | 105359325 | A | 24 February 2016 | US | 2016329599 | A1 | 10 November 2016 |
| | | | | KR | 20150072361 | A | 29 June 2015 |
| | | | | WO | 2015093882 | A1 | 25 June 2015 |
| | | | | CN | 105359325 | B | 18 May 2018 |
| | | | | US | 10587007 | B2 | 10 March 2020 |
| CN | 1971999 | A | 30 May 2007 | WO | 2007059707 | A1 | 31 May 2007 |
| | | | | US | 2008286646 | A1 | 20 November 2008 |
| | | | | KR | 20080073349 | A | 08 August 2008 |
| | | | | US | 2007117012 | A1 | 24 May 2007 |
| | | | | CN | 100517855 | C | 22 July 2009 |
| CN | 1866604 | A | 22 November 2006 | CN | 100446338 | C | 24 December 2008 |

Form PCT/ISA/210 (patent family annex) (January 2015)